# EUROPÄISCHE PATENTANMELDUNG

(11) **EP 0 678 528 A1**
(43) Veröffentlichungstag der Anmeldung: **25.10.1995**
(21) Anmeldenummer: 95104871.9
(22) Anmeldetag: 01.04.1995
(51) Int. Cl.: C08F 8/28, D21H 21/20

(54) **Wässrige Polyacrylamid/Glyoxal-Harzlösungen**

(30) Priorität: 23.04.1994 DE 4414267
(71) Anmelder: CASSELLA Aktiengesellschaft, D-60386 Frankfurt (DE)
(72) Erfinder: König, Klaus, Dr., D-63500 Seligenstadt (DE); Pelzer, Roland, Dr., D-60389 Frankfurt am Main (DE); Ott, Jürgen, Dr., D-61118 Bad Vilbel (DE)
(74) Vertreter: Schweitzer, Klaus, Dr.

(57) **Zusammenfassung**

Die vorliegende Erfindung betrifft eine wäßrige Harzlösung, die durch Umsetzung eines unter Verwendung von einem oder mehreren (Meth-)Acrylamid-Monomeren hergestellten Vorpolymeren mit Glyoxal erhältlich ist, wobei bei dieser Umsetzung das Reaktionsgemisch einmal oder mehrmals verdünnt wird und die Umsetzung somit in zwei oder mehr Teilschritten durchgeführt wird, Verfahren zu ihrer Herstellung und ihre Verwendung als Vernetzer hydroxylgruppenhaltiger Materialien, insbesondere Papier.

## Beschreibung

Die vorliegende Erfindung betrifft durch Umsetzung von Acrylamid-Polymeren oder -Copolymeren mit Glyoxal erhältliche Harze, Verfahren zu ihrer Herstellung und ihre Verwendung als Vernetzer für hydroxylgruppenhaltige Materialien, insbesondere cellulosische Materialien wie z.B. Papier.

Bei der Herstellung von Papier werden einer wäßrigen Suspension von Cellulosefasern Zuschlagstoffe, beispielsweise anorganische Füllstoffe und Hilfsmittel zugesetzt und die resultierende Mischung ("Papiermasse") wird auf ein Endlossieb einer Papiermaschine aufgegeben und entwässert. Die so entstehende Papierbahn wird hierauf durch eine Presse geführt und abschließend durch Kontakttrocknung mit dampfbeheizten Zylindern bei Temperaturen um 100°C auf einen Trockengehalt von über 95 % gebracht.

Als Hilfsmittel werden eine Vielzahl chemischer Produkte mit ganz unterschiedlichen Anwendungszielen eingebracht. Einige dieser Hilfsmittel verbessern als Prozeßchemikalien die Laufeigenschaften des Papiers auf der Papiermaschine. Andere Produkte werden zugesetzt, um gezielt Eigenschaften des Papiers einzustellen oder zu verändern. Naßfestmittel z.B. verleihen dem Papier eine Festigkeit im nassen Zustand, die bis zu 40 % der Trockenfestigkeit betragen kann, während ohne Zusatz eines Naßverfestigers kaum 5 % erreicht werden. Von all diesen Hilfsmitteln wird erwartet, daß sie möglichst quantitativ auf die Cellulosefasern aufziehen.

Aus diesem Grunde tragen die üblichen Naßfestmittel durchweg positive Ladungen. Es handelt sich hierbei im wesentlichen um 2 Produktlinien mit unterschiedlichen Wirkungsmechanismen. Dies sind zum einen Naßfestmittel auf Basis von Polyamidoamin-Epichlorhydrin-Harzen, wie sie z.B. in der EP-B-349 935 beschrieben sind. Diese Produkte zeigen die beste Wirkung bei pH-neutral hergestelltem Papier. Sie enthalten stets einen Anteil organisch gebundenen Chlors (OX), der zu einer entsprechenden unerwünschten Belastung des Abwassers der Papierfabrikation führt. Zum anderen werden Harnstoff- und Melamin-Formaldehyd-Harze eingesetzt. Diese Produkte zeigen ihr Wirkungsoptimum, wenn die Papierherstellung bei pH-Werten zwischen 4 und 5 erfolgt. Ihr Vorteil liegt z.B. in einer hohen Alkalistabilität der ausgerüsteten Papiere. Bei ihrem Einsatz können jedoch insbesondere im Bereich der Papiertrocknung unerwünschte Formaldehydemissionen auftreten.

In der Literatur sind weiterhin Naßfestmittel auf Basis Polyacrylamid/Glyoxal beschrieben (siehe z.B. H. Dunlop-Jones in: J. C. Roberts, Paper Chemistry, Chapman & Hall, New York 1991, S. 87 ff. oder C. E. Farley, Glyoxylated polyacrylamide wet strength resin, in: Wet strength in paper and paper board, 1988 Wet and Dry Strength Short Course, Tappi Seminar Hotes, S. 39 - 42, Tappi Press, Atlanta 1988). Als besondere Eigenschaft dieser Produkte wird ihre temporäre Wirkung genannt. Damit einhergehend ist eine sehr gute Recyclierbarkeit des entsprechend ausgerüsteten Papiers. Infolge der schlechten Lagerstabilität der beschriebenen Produkte haben sich diese auf dem Markt nicht durchsetzen können. Die typische Lagerfähigkeit dieser Produkte beträgt z.B. 8 Tage für eine 10 %ige Lösung bei 25°C oder 65 Tage für eine 6 %ige Lösung unter denselben Bedingungen.

In der EP-A-133 699 werden wasserlösliche Harze auf Basis Poly(Acrylamid-Diallyldimethylammoniumchlorid)/Glyoxal beschrieben, die Papier eine Naßfestigkeit verleihen können. Die höchsten Naßfestigkeiten liegen bei einem Molverhältnis Glyoxal : Acrylamid von 0,1 - 0,2. Nachteile bestehen auch hier in der geringen Haltbarkeit der Produkte, die bei einem Produkt mit 10 % Festkörpergehalt bei Zimmertemperatur nur wenige Tage beträgt. Die US-A-4 605 702 beschreibt ähnliche Produkte, die in der Wiederauflösung der naßfest ausgerüsteten Papiere Vorteile bieten. Bei der Herstellung dieser Produkte wird die Reaktion des Vorpolymeren mit dem Glyoxal nach einmaligem Viskositätsanstieg der Reaktionsmischung abgebrochen.

Durch die in der US-A-4 954 538 beschriebene Mikroemulsionstechnik soll der Nachteil der geringen Haltbarkeit behebbar sein, doch muß dazu naturgemäß in organischen Lösungsmitteln gearbeitet werden.

Die US-A-4 837 087 und US-A-4 544 609 beschreiben elektrisch neutrale Umsetzungsprodukte aus Polyacrylamid, Harnstoff und Glyoxal, die als Pigmentbindemittelvernetzer Verwendung finden. Hervorgehoben wird die im Vergleich zu nur Glyoxal enthaltenden Produkten geringe Tendenz zum Viskositätsaufbau. Erreicht wird dies durch Reaktion des Glyoxals mit Harnstoff, wobei es zu einer Blockierung der Carbonylfunktion kommt. Diese Produkte haben als Naßfestmittel aber nur ein geringes Leistungsvermögen.

Es besteht somit weiterhin Bedarf nach leistungsfähigen Naßfestmitteln mit langer Haltbarkeit, die frei von organisch gebundenem Chlor sind und nicht zu Formaldehyd-Emissionen führen können. Überraschend wurde nun gefunden, daß solche Produkte erhältlich sind durch Umsetzung eines (meth-)acrylamidhaltigen Polymeren oder Copolymeren mit Glyoxal, wenn diese Umsetzung in zwei oder mehr Schritten durchgeführt wird.

Gegenstand der vorliegenden Erfindung ist eine wäßrige Harzlösung, erhältlich durch Umsetzung eines unter Verwendung von einem oder mehreren (Meth-)Acrylamid-Monomeren hergestellten Vorpolymeren mit Glyoxal, dadurch gekennzeichnet, daß während des Ablaufs der Umsetzung das Reaktionsgemisch einmal oder mehrmals verdünnt wird und die Umsetzung somit in zwei oder mehr Teilschritten durchgeführt wird.

Beispiele für (Meth-)Acrylamid-Monomere sind Acrylamid, Methacrylamid, N-Methyl- und N-Ethylacrylamid, N-Methyl- und N-Ehylmethacrylamid oder N-Hydroxyalkyl(meth-)acryl-amide. Wurde bzw. wird das Vorpolymer unter Verwendung mehrerer Monomerer hergestellt, so können die Monomereinheiten beliebig im Vorpolymer verteilt sein. Neben den (Meth-)Acrylamid-Monomeren können dabei auch weitere mit (Meth-)Acrylamiden copolymerisierbare Monomere in das Vorpolymer eingebaut werden, beispielsweise Monomere, die eine positive Ladung tragen oder, z.B. durch Protonierung oder Quaternisierung, in eine kationische Form überführbar sind, oder beispielsweise Monomere wie (Meth-)Acrylsäure und deren Methyl-, Ethyl- und Hydroxyalkylester. Bevorzugt ist das Vorpolymer wasserlöslich. Bevorzugt werden zur Herstellung des Vorpolymeren wasserlösliche Monomere verwendet. Bezüglich ihres Molekulargewichtes können die Vorpolymeren z.B. durch ihren K-Wert nach Ubbelohde charakterisiert werden. Bevorzugt haben die Vorpolymeren bei 20°C einen K-Wert im Bereich 20 - 80, besonders bevorzugt im Bereich 25 - 50.

Das Vorpolymer kann separat hergestellt und später z.B. in Substanz oder in Lösung in die Umsetzung mit dem Glyoxal eingesetzt werden, es kann aber auch, auch in einem Eintopfverfahren, zuerst die Polymerisation des oder der Monomeren zum Vorpolymeren erfolgen und anschließend die erhaltene Lösung oder auch Suspension oder Emulsion des Vorpolymeren dann direkt mit Glyoxal umgesetzt werden. Bevorzugt ist, direkt das bei der Herstellung des Vorpolymeren angefallene Reaktionsgemisch in die Umsetzung mit Glyoxal einzusetzen.

Die Herstellung des Vorpolymeren erfolgt bevorzugt in einem wäßrigen Lösungs- oder Verdünnungsmittel, wobei darunter Wasser und Gemische aus Wasser und einem oder mehreren wassermischbaren organischen Lösungsmitteln in beliebigen Mengenverhältnissen zu verstehen sind. Geeignete organische Lösungsmittel sind beispielsweise Methanol, Ethanol, Propanol, Isopropanol, Ethylenglykol und sein Mono- und Dimethylether, Tetrahydrofuran und Dioxan. Besonders bevorzugt erfolgt die Herstellung des Vorpolymeren in wäßriger homogener Lösung. Ein bevorzugtes Medium ist ein Gemisch aus Wasser und Isopropanol. Die Polymerisation wird bevorzugt bei einer Temperatur von 50 bis 100°C, besonders bevorzugt zwischen 70 und 95°C durchgeführt. Sie erfolgt ansonsten nach an sich bekannter Vorgehensweise. Beispielsweise können übliche Radikalstarter wie Ammoniumpersulfat oder Kaliumpersulfat eingesetzt werden, oder es kann beispielsweise die Molekülmasse leicht in bekannter Weise durch Variation der Reaktionsbedingungen kontrolliert werden. So bewirkt etwa die Zugabe von Isopropanol ebenso wie die Erhöhung der Temperatur eine Erniedrigung der Molekülgröße bei der (Meth-)Acrylamid-Polymerisation.

In den erfindungsgemäßen Harzlösungen, die durch eine in zwei oder mehr Teilschritten durchgeführte Umsetzung des Vorpolymeren mit Glyoxal in Wasser oder einem Gemisch aus Wasser und einem oder mehreren wassermischbaren organischen Lösungsmitteln erhältlich sind, ist das Glyoxal wenigstens zum Teil fest gebunden. Ohne daß eingehende Untersuchungen über die Art der Bindung vorliegen, kann dennoch geschlossen werden, daß das Glyoxal zunächst mit einer aus dem (Meth-)Acrylamid stammenden Amidgruppe des Vorpolymeren unter Addition reagiert. Das so entstehende Zwischenprodukt mit beispielsweise der Gruppierung -CONH-CHOH-CHO kann anschließend über die Aldehydgruppe oder über die Hydroxylfunktion mit weiteren Amidgruppen reagieren, so daß schließlich ein vernetztes Polymer entsteht. Dies gilt auch für die bekannten Produkte, die erhältlich sind, indem die Umsetzung des Vorpolymeren mit Glyoxal in nur einem Schritt durchgeführt wird. Die strukturellen Unterschiede zwischen den erfindungsgemäßen Produkten und den bekannten Produkten sind nicht bekannt, die erfindungsgemäßen Produkte zeichnen sich aber durch eine deutlich höhere Vernetzungsfähigkeit, die z.B. bei der Papierbehandlung zu einer höheren temporären Naßfestigkeit führt, oder höhere Haltbarkeit aus.

Die Vernetzung des Vorpolymers mit Glyoxal zur Herstellung der erfindungsgemäßen Harzlösungen erfolgt bevorzugt in 2 bis 4 Teilschritten, die Anzahl der Teilschritte ist aber nicht begrenzt. Man kann in den einzelnen Teilschritten die Umsetzung während einer bestimmten Zeitdauer, die auch von Teilschritt zu Teilschritt unterschiedlich sein kann, ablaufen lassen und nach deren Ende das Reaktionsgemisch verdünnen, man kann aber auch anhand einer geeigneten Meßgröße die Umsetzung verfolgen und sie in den einzelnen Teilschritten solange ablaufen lassen, bis diese Meßgröße einen bestimmten Wert erreicht hat, und dann das Reaktionsgemisch verdünnen. Durch das Verdünnen wird die Umsetzung verlangsamt. Mann kann sie dann im folgenden Schritt in der verdünnten Lösung mit der gegebenen Geschwindigkeit ablaufen lassen oder auch die Reaktionsgeschwindigkeit durch Zugabe von sie beeinflussenden Substanzen, beispielsweise Säuren oder Basen, verändern, in einer bevorzugten Vorgehensweise z.B. den pH-Wert auf den vor der Verdünnung eingehaltenen Wert zurückstellen. Wenn dann das Endpunktskriterium für diesen Teilschritt erreicht ist, wird wiederum verdünnt, und gewünschtenfalls werden weitere Teilschritte angeschlossen. Das Verdünnen des Reaktionsgemisches zur Beendigung der einzelnen Teilschritte der Umsetzung mit Glyoxal kann auch mit organischen Lösungsmitteln, insbesondere mit wassermischbaren Lösungsmitteln erfolgen. Bevorzugt erfolgt es mit wäßrigen Lösungen, z.B. wäßrigen Lösungen von Alkoholen, besonders bevorzugt wird mit Wasser verdünnt. Nach dem letzten Teilschritt kann zudem je nach vorgesehenem Verwendungszweck eine zusätzliche Verdünnung, eine Einstellung eines bestimmten pH-Wertes, der Zusatz von Hilfsstoffen usw. erfolgen. Auch während des Ablaufs der Umsetzung in den einzelnen Teilschritten können beispielsweise Säuren oder Basen zur Einstellung eines bestimmten pH-Bereichs oder andere Hilfsstoffe zum Reaktionsgemisch zugegeben werden, und es können auch vom Beginn der Umsetzung an Hilfsstoffe wie z.B. Puffersubstanzen zugegen sein. Die Umsetzung des Vorpolymeren mit Glyoxal wird bevorzugt bei Temperaturen von 20°C bis 60°C, besonders bevorzugt bei 25°C bis 50°C, darüber hinaus bevorzugt bei 30°C bis 40°C durchgeführt. Die Temperatur kann auch während der Durchführung der Umsetzung verändert werden. Es kann z.B. auch jeder Teilschritt bei einer anderen Temperatur durchgeführt werden.

Eine geeignete Meßgröße, die zur Verfolgung des Ablaufs der Umsetzung zwischen dem Vorpolymeren und dem Glyoxal und als Kriterium für die Beendigung der einzelnen Teilschritte durch Verdünnen dienen kann, ist beispielsweise die Viskosität des Reaktionsgemisches. Die bei der Um-setzung stattfindende Molekülvergrößerung äußert sich makroskopisch in einem Anstieg der Viskosität des Reaktionsgemisches, die mit zunehmender Reaktionszeit dann stark zunimmt. Läßt man die Reaktion zu lange laufen, so kann die erst noch gut rührbare Harzlösung sogar in einen unerwünschten, nicht mehr rührbaren gelartigen Zustand übergehen. Bevor dies eintritt, muß die Reaktion durch geeignete Maßnahmen, beispielsweise ausreichendes Verdünnen, Zusatz von Hilfsstoffen, z.B. Säuren oder Basen zur pH-Wert-Veränderung, oder Erniedrigung der Temperatur, abgestoppt werden.

Die Viskosität hängt beispielsweise von der Art und dem Molgewicht des Vorpolymeren, dem pH-Wert oder der Temperatur ab. Es ist dabei nicht unbedingt erforderlich, absolute Viskositätsmessungen durchzuführen. Für die Heranziehung als Kriterium für die Beendigung eines Teilschrittes ist es ausreichend, eine bestimmte Veränderung einer mit der Viskosität gekoppelten Größe gegenüber dem zu Beginn des Teilschrittes ermittelten Wert eintreten zu lassen. Beispielsweise kann ein Teilschritt beendet werden, wenn die Auslaufzeit einer bestimmten Menge Reaktionslösung aus einer Öffnung um einen bestimmten Betrag zugenommen hat. Wenn die Umsetzung des Vorpolymeren mit dem Glyoxal über die Viskosität verfolgt wird, ist es besonders günstig, diese kontinuierlich mit einem Prozeßviskosimeter zu messen, so daß keine wiederholte Probenahme mehr erforderlich ist. Wird eine bestimmte Viskosität angezeigt, wird das Reaktionsgemisch verdünnt, gewünschtenfalls wird beispielsweise der pH-Wert eingestellt und man läßt die Umsetzung im nächsten Teilschritt in der verdünnten Lösung ablaufen, bis die Endviskosität hierfür angezeigt wird, und schließt gewünschtenfalls weitere Teilschritte an.

Bevorzugt sind erfindungsgemäße Harzlösungen, die durch Umsetzung eines Vorpolymeren erhältlich sind, das kationische oder in eine kationische Form überführbare Gruppen aufweist, da durch positive Ladungen die Affinität des Harzes zum zu vernetzenden Material erhöht wird. Die Bedeutung solcher Gruppen hängt aber von der vorgesehenen Verwendung des Harzes ab. Besonders bevorzugt ist eine Harzlösung, die dadurch gekennzeichnet ist, daß bei der Herstellung des Vorpolymeren insgesamt bis zu 20 Mol-%, ganz besonders bevorzugt 0,1 bis 10 Mol-%, darüber hinaus bevorzugt 0,5 bis 6 Mol-%, bezogen auf die Gesamtmolzahl des oder der (Meth-)Acrylamid-Monomeren, eines oder mehrerer kationischer oder in eine kationische Form überführbarer Monomerer verwendet werden bzw. wurden. Beispiele für solche Monomeren sind 2-Vinylpyridin, Trimethyl-(4-vinylphenyl)ammoniumchlorid, Dialkyldiallylammoniumchloride oder (Meth-)Acrylsäure-2-dimethylaminoethylester oder (Meth-)Acrylsäure-3-dimethylaminopropylamid. Ein bevorzugtes solches Monomer ist Diallyldimethylammoniumchlorid.

Bei der Herstellung des Vorpolymeren für das erfindungsgemäße Harz können auch weitere mit (Meth-)Acrylamid copolymerisierbare Monomere Verwendung finden, die zu besonderen zusätzlichen Eigenschaften führen können und durch die die Zahl der mit dem Glyoxal reagierenden Amidgruppen im Polymermolekül verringert wird. Bevorzugt ist eine Harzlösung, die dadurch gekennzeichnet ist, daß bei der Herstellung des Vorpolymeren insgesamt bis zu 20 Mol-%, besonders bevorzugt 0,1 bis 10 Mol-%, bezogen auf die Gesamtmolzahl des oder der (Meth-)Acrylamid-Monomeren, eines oder mehrerer Monomerer aus der Reihe (Meth-)Acrylsäure, (Meth-)Acrylsäuremethyl-, -ethyl-, -ethylenglykol- und propylenglykolester, (Meth-)Acrylnitril, Maleinsäure und Vinylacetat verwendet werden bzw. wurden, wobei durch dieses oder diese Monomeren in das Vorpolymer eingebrachte funktionelle Gruppen darin auch vollständig oder teilweise hydrolysiert sein können, insbesondere die Acetatgruppierungen aus dem Vinylacetat zum Alkohol verseift sein können. Bevorzugt ist aus der Reihe dieser Monomeren (Meth-)Acrylsäure, insbesondere Acrylsäure.

Die Glyoxalmenge, mit der das Vorpolymer umgesetzt wird, richtet sich nach dem Verwendungszweck und kann in weiten Grenzen schwanken. Bevorzugt sind erfindungsgemäße Harzlösungen, die erhältlich sind, indem das Vorpolymer mit 0,1 bis 20 mol), besonders bevorzugt mit 0,5 bis 10 mol, ganz besonders bevorzugt mit 0,5 bis 5 mol Glyoxal, bezogen auf die Gesamtmolzahl des oder der (Meth-)Acrylamid-Monomeren im Vorpolymeren, umgesetzt wird. Zur Steuerung der Umsetzung des Glyoxals mit dem Vorpolymeren und zur Erzielung besonderer Eigenschaften können bei der Umsetzung des Vorpolymeren mit dem Glyoxal weitere Substanzen zugegen sein, die mit Glyoxal reagieren können, etwa Verbindungen, bevorzugt wasserlösliche Verbindungen, mit freien Amidgruppen, beispielsweise Harnstoffderivate wie 2-Imidazolidinon oder 4,5-Dihydroxy-2-imidazolidinon und insbesondere Harnstoff selbst. Bevorzugt sind erfindungsgemäße Harzlösungen, die erhältlich sind, indem das Glyoxal zusammen mit 0 bis 50 Mol-%, besonders bevorzugt 0 bis 30 Mol-%, bezogen auf die Molzahl des Glyoxals, eines oder mehrerer Harnstoffderivate, bevorzugt Harnstoff selbst, in die Umsetzung mit dem Vorpolymeren eingesetzt wird. Ist bzw. sind Harnstoffderivate zugegeben, so beträgt ihre Menge im allgemeinen wenigstens 0,5 Mol-%.

Eine bevorzugte erfindungsgemäße Harzlösung ist erhältlich, indem ein Vorpolymer, das nach an sich bekannter Vorgehensweise aus Acrylamid, 0,5 bis 6 Mol-%, bezogen auf die Molzahl des Acrylamids, Diallyldimethylammoniumchlorid und bis zu 5 Mol-%, bezogen auf die Molzahl des Acrylamids, Acrylsäure hergestellt wird bzw. wurde, mit 0,5 bis 5 mol Glyoxal, bezogen auf die Molzahl des Acrylamids, und 0 bis 30 Mol-% Harnstoff, bezogen auf die Molzahl des Glyoxals, umgesetzt wird.

Nach dem letzten Teilschritt der Umsetzung-des Vorpolymeren mit Glyoxal kann mit der letzten Verdünnung des Reaktionsgemisches gewünschtenfalls zugleich eine für die vorgesehene Verwendung geeignete Endkonzentration eingestellt werden. Erfindungsgemäße Harzlösungen können beispielsweise Festkörpergehalte zwischen 1 und 20 Gew.-% aufweisen. Als kostengünstige Transportform eignen sich insbesondere höherkonzentrierte erfindungsgemäße Harzlösungen. Solche Lösungen haben bevorzugt einen Festkörpergehalt zwischen 5 und 15 %, besonders bevorzugt zwischen 7 und 13 %, ganz besonders bevorzugt zwischen 8 und 12 %, der nach dem letzten Teilschritt der Umsetzung eingestellt wird. Der Festkörpergehalt wird bestimmt durch zweistündiges Trocknen von 2 g Harzlösung (entsprechend DIN 53216/1). Für die eigentliche Verwendung als Vernetzer sind verdünntere Harzlösungen bevorzugt, z.B. solche mit Festkörpergehalten von 4 bis 9 %, insbesondere von 6 bis 8 %, aber ebenso z.B. auch 1 % oder 3 %.

Je nach vorgesehenem Verwendungszweck kann es auch günstig sein, nach dem letzten Teilschritt in der erfindungsgemäßen Harzlösung einen bestimmten pH-Wert einzustellen. Soll die Lösung längere Zeit gelagert werden, so ist es bevorzugt, einen pH-Wert unter 5, besonders bevorzugt zwischen 1 und 4, ganz besonders bevorzugt zwischen 1,5 und 3,5, darüber hinaus bevorzugt zwischen 2 und 3, einzustellen. Zur Einstellung dieser pH-Werte sind alle üblichen Säuren geeignet, insbesondere z.B. Salz-, Salpeter- und Phosphorsäure und ganz besonders Schwefelsäure. Zur besseren Kontrolle des pH-Wertes können der Harzlösung auch Puffersubstanzen zugesetzt sein. Weiterhin können in der Harzlösung übliche Hilfsstoffe, beispielsweise Mittel, die die Viskosität beeinflussen oder Konservierungsmittel, enthalten sein.

Gegenstand der vorliegenden Erfindung ist weiterhin ein Verfahren zur Herstellung der erfindungsgemäßen Harzlösungen, daß dadurch gekennzeichnet ist, daß man eine gewünschtenfalls auch ein oder mehrere Harnstoffderivate enthaltende Glyoxallösung und eine nach an sich bekannten Methoden erhältliche Lösung des Vorpolymeren zusammengibt und die Umsetzung ablaufen läßt, bis die Viskosität des Reaktionsgemisches auf einen bestimmten Wert angestiegen ist, die Reaktion durch Verdünnen verlangsamt und dann in der verdünnten Lösung weiterlaufen läßt, bis die Viskosität des Reaktionsgemisches erneut auf einen bestimmten Wert angestiegen ist, erneut verdünnt und den Zyklus aus Reaktionsablauf und Verlangsamung durch Verdünnen gewünschtenfalls noch mehrmals wiederholt, und abschließend gewünschtenfalls den pH-Wert und den Festkörpergehalt der Harzlösung einstellt. Bevorzugt ist ein Verfahren, bei dem die Viskosität kontinuierlich gemessen wird, z.B. durch ein Online-Prozeßviskosimeter. Bezüglich Reaktionsparametern wie Temperatur, pH-Wert-Einstellung usw. gilt für das erfindungsgemäße Verfahren das oben für die erfindungsgemäßen Harzlösungen Gesagte. So ist z.B. ein Verfahren bevorzugt, bei dem der pH-Wert des Reaktionsgemisches innerhalb gewisser Grenzen gehalten wird, beispielsweise nach dem Verdünnen der vor der Verdünnung eingehaltene Bereich eingehalten wird.

Die erfindungsgemäßen Harzlösungen zeichnen sich gegenüber den bekannten, durch einstufige Umsetzung von Acrylamid-Polymeren mit Glyoxal erhältlichen Produkten durch eine deutlich höhere Vernetzungsfähigkeit, beispielsweise im Papierherstellungsprozeß, und durch eine deutlich höhere Haltbarkeit aus. Wie die bekannten Produkte können sie Verwendung finden als Vernetzer für hydroxylgruppenhaltige Materialien zur Erzielung bestimmter Materialeigenschaften, wie einer erhöhten Reißlänge, eines erhöhten Berstdrucks oder einer erhöhten Naßfestigkeit. Die durch Behandlung mit den erfindungsgemäßen Harzlösungen erzielte Naßfestigkeit ist temporär, so behandeltes Papier hat somit eine verbesserte Recyclingfähigkeit. Beispiele für hydroxylgruppenhaltige Materialien, die vernetzt werden können, sind vollsynthetische und teilsynthetische Polymere, z.B. Polyvinylalkohol oder Carboxymethylcellulose, und natürliche Produkte wie Pflanzenschleime, Stärke und insbesondere cellulosische Materialien, z.B. baumwoll- oder viskosehaltige Gewebe und Textilien und Fasergußerzeugnisse, und insbesondere Papier. Eine bevorzugte Verwendung der erfindungsgemäßen Harzlösungen ist die Vernetzung cellulosischen Materials, insbesondere Papier, zur Erhöhung der Festigkeit, also der Naß- und Trockenfestigkeit, insbesondere der Naßfestigkeit. Soll Papier mit einer erfindungsgemäßen Harzlösung behandelt werden, so kann diese an verschiedenen Stellen im Papierherstellungsprozeß eingesetzt werden, beispielsweise im Dick- oder Dünnstoffbereich der Papierherstellung - in diesem Falle ist es bevorzugt, ein Harz einzusetzen, das aus einem Vorpolymer erhältlich ist, das unter Verwendung eines kationischen Monomeren hergestellt wurde -, oder zur Oberflächenbehandlung am Ende der Papierherstellung, dann unter Durchführung eines weiteren Trocknungsvorganges. Ähnlich können z.B. auch Cellulosefaser-Garne, -Gewebe oder fertige cellulosefaserhaltige Textilien mit den erfindungsgemäßen Harzlösungen behandelt werden. Bei der Behandlung hydroxylgruppenhaltiger Materialien können die erfindungsgemäßen Harzlösungen auch zusammen mit geeigneten anderen Hilfsmitteln zur Behandlung solcher Materialien eingesetzt werden, beispielsweise im Falle der Papierbehandlung mit Mitteln zur Oberflächenveredlung.

Die folgenden Beispiele erläutern die Erfindung. Prozentangaben sind darin Gewichtsprozente, wenn nichts anderes angegeben ist.

### Beispiel 1

a) Herstellung des Vorpolymeren In einem Kolben mit Rührer, Rückflußkühler, Innenthermometer, zwei Tropftrichtern und einem Gaseinleitungsrohr werden unter Rühren 480 ml entsalztes Wasser, 80 ml Isopropanol und 80 g einer 60 %igen Lösung von Diallyldimethylammoniumchlorid in Wasser vorgelegt, ein schwacher Stickstoffstrom darüber geleitet und auf 80°C erhitzt. Unter weiterem Überleiten von Stickstoff werden dann gleichzeitig beginnend eine entgaste Lösung von 488 g Acrylamid in 500 ml entsalztem Wasser innerhalb von 100 min und eine Lösung von 3,2 g Ammoniumpersulfat in 96 ml entsalztem Wasser innerhalb von 120 min zugetropft. Anschließend wird weitere 2 h bei dieser Temperatur nachgerührt und auf 60°C abgekühlt. Es werden 440 ml entsalztes Wasser hinzugegeben und auf Zimmertemperatur abgekühlt. Die leicht gelbliche Lösung hat eine Viskosität von 490 mPas (20°C) bei einem Festkörper von 27,6 %. Der K-Wert beträgt 45 (20°C).
b) Umsetzung des Vorpolymeren mit Glyoxal In einen Kolben mit Rührer, Innenthermometer und pH-Elektrode werden 40 ml entsalztes Wasser, 3 g (0,05 mol) Harnstoff und 58,5 g einer 40 %igen Lösung von Glyoxal (0,4 mol) in Wasser vorgelegt. Es wird auf 35°C erhitzt und anschließend werden 30 g der unter a) hergestellten Vorpolymer-Lösung sowie 10 ml Phosphatpuffer vom pH 7,5 hinzugegeben und die Reaktionslösung auf pH 7,5 eingestellt. Unter Rühren bei 35°C wird der Viskositätsverlauf der Reaktionsmischung als Auslaufzeit aus einer 50 ml-Vollpipette verfolgt, deren Spitze so erweitert wurde, daß die Auslaufzeit der-Reaktionslösung zu Anfang 10 - 12 sec beträgt. Der erste Reaktionsschritt ist beendet, wenn die Auslaufzeit um 5 sec über den Anfangswert gestiegen ist. Während dieser Zeit wird der pH-Wert der Lösung mit Natronlauge bei 7,1 - 7,4 gehalten werden. Ist die gewünschte Viskosität erreicht, wird sofort mit 60 ml entsalztem Wasser verdünnt. Man rührt dann weiter bei pH 7,1 - 7,4 und 35°C, bis die Viskosität erneut 5 sec über den Anfangswert gestiegen ist, verdünnt mit 60 ml entsalztem Wasser, und läßt in einem dritten Schritt die Viskosität dann wiederum um 5 sec ansteigen. Abschließend wird mit 150 ml entsalztem Wasser verdünnt und das Harz mit Schwefelsäure auf pH 2,0 - 2,5 angesäuert. Man erhält 430 g eines schwach opalen Harzes, das bei Zimmertemperatur auch nach einem Jahr nicht vergelt ist.

### Beispiel 2

18,5 kg einer Vorpolymer-Lösung, die entsprechend Beispiel 1a) durch Copolymerisation von Acrylamid und Diallyldimethylammoniumchlorid erhalten wurden, werden entsprechend Beispiel 1b) mit Glyoxal in drei Teilschritten umgesetzt. Die jeweiligen Viskositätsanstiege werden hier jedoch durch ein Inline-Prozeßviskosimeter kontinuierlich verfolgt. Das Gerät befindet sich dabei in einer Bypassleitung des Kessels, durch die die Reaktionslösung gepumpt wird. Die Bestimmung des Endpunktes einer Reaktionsstufe ist auf diese Weise ohne Probenahme leicht möglich. Die Ausbeute beträgt 263 kg eines schwach opalen Harzes.

### Beispiel 3

Dieses Beispiel entspricht Beispiel 2 mit dem Unterschied, daß bei der Umsetzung des Vorpolymeren mit Glyoxal auf die Zugabe von Harnstoff verzichtet wird. Es werden 256 kg eines klaren Harzes erhalten.

### Beispiel 4

Dieses Beispiel entspricht Beispiel 1 mit dem Unterschied, daß bei der Herstellung des Vorpolymeren anstelle von 80 g einer 60 %igen Lösung von Diallyldimethylammoniumchlorid in Wasser 160 g einer solchen Lösung eingesetzt werden.

### Beispiel 5

Dieses Beispiel entspricht Beispiel 1 mit dem Unterschied, daß bei der Herstellung des Vorpolymeren anstelle von 80 g einer 60 %igen Lösung von Diallyldimethylammoniumchlorid in Wasser nur 60 g einer solchen Lösung eingesetzt werden und daß zusätzlich bei der Herstellung des Vorpolymeren 20 g Acrylsäure eingesetzt werden.

### Beispiel 6

Dieses Beispiel entspricht Beispiel 1 mit dem Unterschied, daß die Umsetzung des Vorpolymeren mit Glyoxal nicht in drei Teilschritten durchgeführt wird, sondern nur in zwei Teilschritten, wobei man in jedem Schritt die Auslaufzeit der Reaktionsmischung aus der Pipette gegenüber der Anfangs-Auslaufzeit um 5 sec ansteigen läßt.

### Beispiel 7

Dieses Beispiel entspricht Beispiel 6 mit dem Unterschied, daß man in jedem der zwei Teilschritte die Auslaufzeit um 10 sec ansteigen läßt.

### Beispiel 8

Dieses Beispiel entspricht Beispiel 6 mit dem Unterschied, daß man in jedem der zwei Teilschritte die Auslaufzeit um 25 sec ansteigen läßt.

### Beispiel 9 bis 12

Diese Beispiele entsprechen Beispiel 1 mit dem Unterschied, daß die Umsetzung des Vorpolymeren mit Glyoxal nicht erfindungsgemäß in mehreren Teilschritten, sondern entsprechend dem Stand der Technik in nur einem Schritt durchgeführt wird. In Beispiel 9 läßt man die Auslaufzeit der Reaktionsmischung um 5 sec ansteigen, in Beispiel 10 um 10 sec, in Beispiel 11 um 20 sec und in Beispiel 12 um 40 sec.

### Beispiel 13

Dieses Beispiel entspricht Beispiel 1 mit den Unterschieden, daß bei der Herstellung des Vorpolymeren anstelle von 80 ml Isopropanol 160 ml Isopropanol eingesetzt werden und bei 85°C anstatt bei 80°C polymerisiert wird, und daß bei der Umsetzung des Vorpolymeren mit Glyoxal anstelle von 0,4 mol Glyoxal nur 0,2 mol Glyoxal eingesetzt werden und auf die Zugabe von Harnstoff verzichtet wird. Es wird eine farblose Harzlösung mit einem Festkörpergehalt von 7,1 % erhalten, die durch Lagerung eine Opaleszenz entwickelt.

### Beispiel 14

a) Herstellung des Vorpolymeren In einer Polymerisationsapparatur wie in Beispiel 1a) beschrieben werden 480 ml entsalztes Wasser, 120 ml Isopropanol und 80 g einer 62 %igen Lösung von Diallyldimethylammoniumchlorid in Wasser vorgelegt und auf Rückflußtemperatur erhitzt. Zu dieser Lösung werden 488 g Acrylamid, gelöst in 1500 ml entsalztem Wasser und stabilisiert mit 60 ppm Hydrochinonmonomethylether, und, gleichzeitig beginnend, eine Lösung von 5 g Ammoniumpersulfat in 96 ml entsalztem Wasser, zugegeben. Während dieser Reaktionsphase wird die Temperatur derart eingestellt, daß ein schwacher Rückfluß erhalten bleibt. Nach 100 min ist die Acrylamiddosierung beendet, die Temperatur wird auf 80°C erniedrigt und die Zugabe der Ammoniumpersulfatlösung 20 min weitergeführt. Ist auch diese Zugabe beendet, wird 2 h bei 80°C nachgerührt.
b) Umsetzung des Vorpolymeren mit Glyoxal 518 g der unter a) erhaltenen Polymerlösung werden in Gegenwart eines Phosphatpuffers gemäß dem in Beispiel 1b) beschriebenen Verfahren mit 411,6 g einer 40 %igen Lösung von Glyoxal in Wasser, aber ohne Zusatz von Harnstoff, umgesetzt. Am Ende des ersten Teilschritts wird mit 560 g Wasser, am Ende des zweiten Teilschritts mit 560 g Wasser und am Ende des dritten Teilschritts mit 1680 g Wasser verdünnt. Es werden 3940 g eines schwach opalen Harzes mit guter Lagerstabilität erhalten. Der Festkörpergehalt beträgt 7,5 %.

### Anwendungsbeispiel A (Eintrag in die Papiermasse)

Für erfindungsgemäß hergestellte Harzlösungen, bei denen die Umsetzung des Vorpolymeren mit Glyoxal in zwei oder mehr Schritten durchgeführt wurde, und für entsprechend dem Stand der Technik hergestellte Harzlösungen, bei denen diese Umsetzung in einem Schritt durchgeführt wurde, wurde die Erhöhung der Naßfestigkeit von Papier bestimmt.

Bei der Papierherstellung wurde von einer 2 %igen Suspension von gebleichtem Fichtensulfitzellstoff ausgegangen, der mittels Laborrefiner auf 30 SR aufgemahlen worden war (der Trockengehalt einer Zellstoff-Fasersuspension wird nach Zellcheming-Merkblatt V/7/61 wie folgt ermittelt: Auf einem Rapid-Köthen-Blattbildner wird durch Aufgabe einer definierten Menge der Fasersuspension ein Blatt gebildet. Nach Abnahme und Trocknung des Blattes wird auf den Fasergehalt der Suspension zurückgerechnet). Zu dieser 2 %igen Suspension wurde eine solche Menge einer verdünnten erfindungsgemäßen bzw. dem Stand der Technik entsprechenden Harzlösung zudosiert, daß, bezogen auf die Trockensubstanz der Zellstoffsuspension, 1 % an festem Harz vorlag. Hierzu waren die in den Beispielen erhaltenen Harzlösungen auf einen Festkörpergehalt von 1 % (bestimmt nach DIN 53216/1) vorverdünnt worden. Nun wurde der pH-Wert der Suspension entsprechend der Vorgabe mit Schwefelsäure bzw. Natronlauge eingestellt (auf pH 4,5 bzw. auf pH 7). Nach 5 min Rühren wurde der Suspension ein Anteil entsprechend 2,5 g trockenen Zellstoffs entnommen und damit ein Laborblatt mit Hilfe eines Rapid-Köthen-Blattbildners erzeugt. Das Blatt wurde abgegautscht und 5 min auf einem dampfbeheizten Metallzylinder getrocknet. Anschließend wurde das Blatt im Trockenschrank 10 min bei 120°C ausgereift. Nach 24 h Klimatisierung wurde die Naßfestigkeit durch Zugversuche an 10 gewässerten Papierstreifen aus 2 unter identischen Bedingungen hergestellten Prüfblättern ermittelt. Die Wässerungszeit der Papierstreifen betrug 1 h.

Die mit der dem Stand der Technik entsprechenden Harzlösung des Beispiels 9 erhaltenen Naßfestigkeiten bei pH 4,5 und pH 7 wurden dabei jeweils als 100 % genommen, die mit den anderen Harzlösungen erhaltenen Naßfestigkeiten sind in Prozent der Naßfestigkeit angegeben, die mit der Lösung des Beispiels 9 bei demselben pH-Wert erhalten wurde.

**Tabelle 1**

| Harzlösung Beispiel | Anzahl der Reaktionsschritte | Zunahme der Auslaufzeit (sec) | Naßfestleistung bei | |
|---|---|---|---|---|
| | | | pH 4,5 | pH 7 |
| 9 | 1 | 5 | 100 % | 100 % |
| 10 | 1 | 10 | 100 % | 103 % |
| 11 | 1 | 20 | 96 % | 114 % |
| 12 | 1 | 40 | 98 % | 119 % |
| 6 | 2 | 5 (1. Schritt) | 98 % | 125 % |
| | | 5 (2. Schritt) | | |
| 7 | 2 | 10 (1. Schritt) | 102 % | 128 % |
| | | 10 (2. Schritt) | | |
| 8 | 2 | 25 (1. Schritt) | 108 % | 147 % |
| | | 25 (2. Schritt) | | |
| 1 | 3 | 5 (1. Schritt) | 121 % | 172 % |
| | | 5 (2. Schritt) | | |
| | | 5 (3. Schritt) | | |

Aus den Daten in Tabelle 1 ist ersichtlich, daß die erfindungsgemäßen Harze sowohl im Sauren als auch im Neutralen zu einer deutlich höheren Naßfestleistung führen als Harze, bei denen die Umsetzung des Vorpolymeren mit Glyoxal in nur einem Schritt durchgeführt wird, und daß die Leistungsverbesserung nicht durch die Verlängerung der Gesamt-Umsetzungszeit, sondern durch die Erhöhung der Zahl der Reaktionsschritte bewirkt wird.

### Anwendungsbeispiel B (Eintrag in die Papiermasse)

Wie im Anwendungsbeispiel A beschrieben wurden aus einer 2 %igen Zellstoffsuspension und der erfindungsgemäßen Harzlösung des Beispiels 1, die auf einen Festkörpergehalt von 1 % vorverdünnt worden war, Prüfpapiere mit 1 % Festharzeintrag, bezogen auf die Trockensubstanz der Zellstoffsuspension, hergestellt. Der pH-Wert der Suspension wurde auf 7 eingestellt. Wie unter A beschrieben wurden dann an gewässerten Streifen der Prüfpapiere die Naßfestigkeiten ermittelt. Die Wässerungszeit der Papierstreifen beträgt üblicherweise 1 h. Da das erfindungsgemäße Harz den besonderen Vorteil der temporären Naßfestigkeit aufweist, sind zusätzliche Prüfungen bei anderen Wässerungszeiten durchzuführen. Die Naßbruchwiderstände (in Newton) des mit der erfindungsgemäßen Harzlösung behandelten Papiers nach verschiedenen Wässerungszeiten sind in Tabelle 2 angegeben. Zum Vergleich wurden die Naßbruchwiderstände von mit der gleichen Menge ®Madurit MW 167 (Madurit ist ein eingetragenes Warenzeichen der Cassella AG, 60386 Frankfurt am Main), einem handelsüblichen Melamin-Formaldehyd-Naßfestmittel der Cassella AG, behandeltem Papier ermittelt. Die mit dem Melamin-Formaldehyd-Harz erzeugte Naßfestigkeit zeigt keine Abhängigkeit von der Wässerungszeit.

**Tabelle 2**

| Naßbruchwiderstand (N) | | | | | |
|---|---|---|---|---|---|
| Naßfestmittel: | Wässerungszeit | | | | |
| | 10 sec | 1 min | 10 min | 1 h | 24 h |
| Erfindungsgemäßes Harz gemäß Beispiel 1: | 12 | 9,3 | 7,8 | 6,7 | 4,7 |
| ®Madurit MW 167: | 11,5 | 12,0 | 10,6 | 10,8 | 10,7 |

### Anwendungsbeispiel C (Auftrag auf die Papieroberfläche)

Das erfindungsgemäße Naßfestmittel kann allein oder in Abmischung mit nichtionischen oder kationischen Additiven auch durch einen Oberflächenauftrag, z.B. mit einer Leimpresse in ein Rohpapier eingebracht werden. Ein übliches Mittel zur Oberflächenveredlung eines Rohpapiers ist Stärke. In diesem Beispiel wird die durch einen Leimpressenauftrag der erfindungsgemäßen Harzlösungen in Kombination mit Stärke erzielte Naßfestigkeit ermittelt. Dazu wird zunächst ®Amisol 5582 (®Amisol ist ein eingetragenes Warenzeichen der Fa. Cerestar Deutschland GmbH), eine niederviskose Stärke der Fa. Cerestar, durch Aufkochen in Lösung gebracht. Zur abgekühlten Lösung wird die gewünschte Menge des jeweiligen Vernetzerharzes zugegeben und eingerührt. Die in diesen Flotten auf 100 Gewichtsteile Wasser enthaltenen (Gewichts-)Anteile an Stärke und an Festharz sind in Tabelle 3 angegeben. Mit diesen Flotten wird eine übliche Laborleimpresse, z.B. der Fa. Mathis (CH), beschickt, das zu leimende Rohpapier zwischen den Auftragswalzen hindurchgeführt und wie oben getrocknet. Es ergaben sich die in Tabelle 3 angegebenen Auftragsmengen an Festsubstanz. Die Naßfestigkeiten (längs) der Papiere nach einer Wässerungszeit von 30 Sekunden nach einer Wässerungszeit von 5 Minuten wurden dann wie oben bestimmt.

Zum Vergleich wurden die Naßfestigkeiten ermittelt, die mit einer Kombination aus Stärke und ®Bozefix N 57 bzw. Stärke und ®Bozefix TSI (®Bozefix ist ein eingetragenes Warenzeichen der Société Francaise Hoechst) erzielt wurden, handelsüblichen nichtionischen Harnstoff-GlyoxalNaßfestmitteln der Société Francaise Hoechst. Aus den in Tabelle 3 angegebenen Naßbruchwiderständen (in Newton) ist das höhere Leistungsvermögen der erfindungsgemäßen Harze ersichtlich.

**Tabelle 3**

| Naßfestmittel | Anteile Stärke:Harz (in 100 Tl. Wasser) | Auftrag (g/m²) | Naßfestigkeit längs (N) Wässerungszeit 30'' | Naßfestigkeit längs (N) Wässerungszeit 5' |
|---|---|---|---|---|
| - | - | - | 1,5 | 1,3 |
| - | 4:0 | 3,8 | 2,2 | 1,9 |
| Beispiel 14 | 4:0,5 | 4,8 | 15,7 | 3,8 |
| Beispiel 14 | 4:1,0 | 5,1 | 20,1 | 6,1 |
| Beispiel 14 | 4:1,5 | 5,4 | 22,0 | 8,3 |
| Beispiel 14 | 4:2,0 | 6,2 | 30,0 | 9,7 |
| ®Bozefix N 57 | 4:0,5 | 4,3 | 5,7 | 1,3 |
| ®Bozefix N 57 | 4:1,0 | 5,1 | 8,2 | 1,8 |
| ®Bozefix N 57 | 4:1,5 | 5,5 | 10,1 | 1,9 |
| ®Bozefix N 57 | 4:2,0 | 6,0 | 10,0 | 2,1 |
| ®Bozefix TSI | 4:0,5 | 4,6 | 8,3 | 3,6 |
| ®Bozefix TSI | 4:1,0 | 5,1 | 15,2 | 4,1 |
| ®Bozefix TSI | 4:1,5 | 5,7 | 20,8 | 4,5 |
| ®Bozefix TSI | 4:2,0 | 6,1 | 21,6 | 4,4 |

## Patentansprüche

1. Wäßrige Harzlösung, erhältlich durch Umsetzung eines unter Verwendung von einem oder mehreren (Meth-)Acrylamid-Monomeren hergestellten Vorpolymeren mit Glyoxal, dadurch gekennzeichnet, daß während des Ablaufs der Umsetzung das Reaktionsgemisch einmal oder mehrmals verdünnt wird und die Umsetzung somit in zwei oder mehr Teilschritten durchgeführt wird.

2. Harzlösung gemäß Anspruch 1, dadurch gekennzeichnet, daß bei der Herstellung des Vorpolymeren insgesamt bis zu 20 Mol-%, bevorzugt 0,1 bis 10 Mol-%, besonders bevorzugt 0,5 bis 6 Mol-%, bezogen auf die Gesamtmolzahl des oder der (Meth-)Acrylamid-Monomeren, eines oder mehrerer kationischer oder in eine kationische Form überführbarer Monomerer, bevorzugt Diallyldimethylammoniumchlorid, verwendet werden bzw. wurden.

3. Harzlösung gemäß Anspruch 1 und/oder 2, dadurch gekennzeichnet, daß bei der Herstellung des Vorpolymeren insgesamt bis zu 20 Mol-%, bevorzugt 0,1 bis 10 Mol-%, bezogen auf die Gesamtmolzahl des oder der (Meth-)Acrylamid-Monomeren, eines oder mehrerer Monomerer aus der Reihe (Meth-)Acrylsäure, (Meth-)Acrylsäuremethyl, -ethyl-, -ethylenglykol und -propylenglykolester, (Meth-)Acrylnitril, Maleinsäure und Vinylacetat, bevorzugt (Meth-)Acrylsäure, verwendet werden bzw. wurden, wobei durch dieses oder diese Monomeren in das Vorpolymer eingebrachte funktionelle Gruppen auch darin vollständig oder teilweise hydrolysiert sein können.

4. Harzlösung gemäß einem oder mehreren der Ansprüche 1 bis 3, dadurch gekennzeichnet, daß das Vorpolymer mit 0,1 bis 20 mol, bevorzugt 0,5 bis 10 mol, besonders bevorzugt 0,5 bis 5 mol Glyoxal, bezogen auf die Gesamtmolzahl des oder der bei der Herstellung des Vorpolymeren verwendeten (Meth-)Acrylamid-Monomeren, umgesetzt wird.

5. Harzlösung gemäß einem oder mehreren der Ansprüche 1 bis 4, dadurch gekennzeichnet, daß das Glyoxal zusammen mit 0 bis 50 Mol-%, bevorzugt 0 bis 30 Mol-%, bezogen auf die Molzahl des Glyoxal, eines oder mehrerer Harnstoffderivate, bevorzugt Harnstoff selbst, in die Umsetzung mit dem Vorpolymer eingesetzt wird.

6. Harzlösung gemäß einem oder mehreren der Ansprüche 1 bis 5, dadurch gekennzeichnet, daß ein Vorpolymer, das aus Acrylamid, 0,5 bis 6 Mol-%, bezogen auf die Molzahl des Acrylamids, Diallyldimethylammoniumchlorid und bis zu 5 Mol-%, bezogen auf die Molzahl des Acrylamids, Acrylsäure hergestellt wird bzw. wurde, mit 0,5 bis 5 mol Glyoxal, bezogen auf die Molzahl des Acrylamids, und 0 bis 30 Mol-% Harnstoff, bezogen auf die Molzahl des Glyoxal, umgesetzt wird.

7. Harzlösung gemäß einem oder mehreren der Ansprüche 1 bis 6, dadurch gekennzeichnet, daß ein pH-Wert zwischen 1 und 4, bevorzugt zwischen 1,5 und 3,5, und ein Festkörpergehalt zwischen 1 und 20, bevorzugt zwischen 5 und 15 %, eingestellt wurde.

8. Verfahren zur Herstellung einer Harzlösung gemäß einem oder mehreren der Ansprüche 1 bis 7, dadurch gekennzeichnet, daß man eine gewünschtenfalls auch ein oder mehrere Harnstoffderivate enthaltende Glyoxallösung und eine nach an sich bekannten Methoden erhältliche Lösung des Vorpolymeren zusammengibt und die Umsetzung ablaufen läßt, bis die Viskosität des Reaktionsgemisches auf einen bestimmten Wert angestiegen ist, die Reaktion durch Verdünnen verlangsamt und dann in der verdünnten Lösung weiterlaufen läßt, bis die Viskosität des Reaktionsgemisches erneut auf einen bestimmten Wert angestiegen ist, erneut verdünnt und den Zyklus aus Reaktionsablauf und Verlangsamung durch Verdünnen gewünschtenfalls noch mehrmals wiederholt, und abschließend gewünschtenfalls den pH-Wert und den Festkörpergehalt der Harzlösung einstellt.

9. Verwendung einer Harzlösung gemäß einem oder mehreren der Ansprüche 1 bis 7 als Vernetzer für hydroxylgruppenhaltige Materialien.

10. Verwendung gemäß Anspruch 9, dadurch gekennzeichnet, daß cellulosisches Material, insbesondere Papier, unter Erhöhung der Festigkeit, insbesondere der Naßfestigkeit, vernetzt wird.
